# EUROPÄISCHE PATENTSCHRIFT

(11) **EP 4 043 252 B1**
(45) Veröffentlichungstag und Bekanntmachung des Hinweises auf die Patenterteilung: **06.09.2023**
(21) Anmeldenummer: 22152254.3
(22) Anmeldetag: 19.01.2022
(51) Int. Cl.: B60H 1/00

(54) **VERFAHREN ZUM EINLEITEN EINES ABTAUPROZESSES EINES WÄRMEÜBERTRAGERS EINER WÄRMEPUMPE EINES KRAFTFAHRZEUGS**
METHOD FOR INITIATING A DEFROSTING PROCESS OF A HEAT EXCHANGER OF A HEAT PUMP OF A MOTOR VEHICLE
PROCÉDÉ DE DÉMARRAGE D'UN PROCESSUS DE DÉGIVRAGE D'UN ÉCHANGEUR DE CHALEUR D'UNE POMPE À CHALEUR D'UN VÉHICULE AUTOMOBILE

(30) Priorität: 15.02.2021 DE 102021201380
(43) Veröffentlichungstag der Anmeldung: 17.08.2022
(73) Patentinhaber: VOLKSWAGEN AG, 38440 Wolfsburg (DE)
(72) Erfinder: Westhäuser, Jochen, 38102 Braunschweig (DE); Twenhövel, Sven, 38524 Sassenburg (DE); Albrecht, Jan-Christoph, 38442 Wolfsburg (DE)

(56) Entgegenhaltungen:
- EP-A1- 1 273 467
- EP-A1- 2 666 652
- EP-A1- 3 736 148

## Beschreibung

Die vorliegende Erfindung betrifft ein Verfahren zum Einleiten eines Abtauprozesses eines Wärmeübertragers einer Wärmepumpe eines Kraftfahrzeugs, insbesondere eines Elektrofahrzeugs oder eines batterieelektrischen Fahrzeugs oder eines Hybridelektrokraftfahrzeugs, wobei der Wärmeübertrager und ein Kühlmittelwärmeübertrager eines Kühlkreislaufes des Kraftfahrzeugs in einem gemeinsamen Luftpfad angeordnet sind.

Ferner betrifft die vorliegende Erfindung ein Kraftfahrzeug mit einer Vorrichtung zum Abtauen eines Wärmeübertragers einer Wärmepumpe des Kraftfahrzeugs, wobei die Vorrichtung eine Recheneinheit aufweist.

Wärmepumpen werden in der Elektromobilität zum Beheizen des Fahrzeuginnenraums eingesetzt. Die zum Heizen benötigte Wärme wird aus der Außenluft entnommen. Hierzu muss ein Wärmeübertrager der Wärmepumpe, auch Umgebungswärmeübertrager genannt, unter die Umgebungstemperatur gekühlt werden. Unterschreitet die Außenluft dabei ihren Taupunkt, bildet sich Reif auf der Oberfläche des Wärmeübertragers, wodurch die Luft am Durchströmen des Wärmeübertragers gehindert wird. Ein effizienter Betrieb der Wärmepumpe ist dann nicht mehr gesichert.

Um eine Durchströmung des Wärmeübertragers mit Außenluft zu ermöglichen, sind Abtauzyklen notwendig, bei denen der Wärmeübertrager aufgeheizt wird. Während des Abtauzyklus schmilzt das Eis, und eine Durchströmung des Wärmeübertragers mit Außenluft kann wieder erfolgen.

Zum Einleiten des Abtauprozesses sind im Stand der Technik Verfahren bekannt, bei denen eine Abnahme des Saugdrucks der Wärmepumpe überwacht wird.

Ferner sind Verfahren bekannt, bei denen eine zusätzliche Sensorik verwendet wird, mit der die Schichtdicke des auf dem Wärmeübertrager gebildeten Eises oder Reifes gemessen wird.

Aus der DE 10 2009 052 409 B4 ist eine Luft-/Wasserwärmepumpe mit einem Verdampfer bekannt, wobei dem Verdampfer ein Lüfter und eine Lüftersteuereinheit zugeordnet sind. Die Lüftersteuereinheit erfasst einen Strom und/oder eine Drehzahl des Lüfters und ermittelt einen Arbeitspunkt des Lüfters basierend auf dem erfassten Strom und/oder der Drehzahl. Die Lüftersteuereinheit ist dazu ausgestaltet, den Arbeitspunkt des Lüfters zu überwachen und bei Unter- beziehungsweise Überschreiten eines Schwellwertes ein Abtaueinleitungssignal an einen Regler weiterzuleiten.

Die EP 0 563 724 B1 offenbart ein Verfahren zur Feststellung der Eisbildung auf einem Verdampfer eines Kühlgerätes, wobei das Kühlgerät einen von einem elektrischen Motor angetriebenen Ventilator zum Durchströmen von Luft durch den Verdampfer aufweist. Bei dem Verfahren wird die Änderung eines Betriebsparameters des den Ventilator betreibenden Motors gemessen.

Das Dokument EP 3 736 148 A1 zeigt eine Anordnung eines Wärmeübertragers einer Wärmepumpe und eines Kühlmittelwärmeübertragers in einem gemeinsamen Luftpfad.

Nachteilig an dem bekannten Verfahren, bei dem der Saugdruck der Wärmepumpe des Kraftfahrzeugs überwacht wird, ist, dass der Saugdruck auch temporär im Anfahrprozess des Kraftfahrzeugs abfallen kann, sodass gegebenenfalls unnötige Abtauprozesse eingeleitet werden.

Darüber hinaus kann es bei bekannten Verfahren zur Bestimmung eines Vereisungszustandes eines Wärmeübertragers vorkommen, dass eine Veränderung externer Einflüsse dazu führt, dass eine Vereisung festgestellt wird, obwohl keine Eisschicht auf dem Wärmeübertrager vorhanden ist.

Der vorliegenden Erfindung liegt die Aufgabe zugrunde, ein gegenüber externen Einflüssen unempfindliches Verfahren zum Einleiten eines Abtauprozesses eines Wärmeübertragers einer Wärmepumpe eines Kraftfahrzeugs bereitzustellen, welches auch in Kombination mit weiteren Verfahren eingesetzt werden kann.

Zur Lösung der der Erfindung zugrundeliegenden Aufgabe wird ein Verfahren zum Einleiten eines Abtauprozesses eines Wärmeübertragers einer Wärmepumpe eines Kraftfahrzeugs, insbesondere eines Elektrofahrzeugs oder eines batterieelektrischen Fahrzeugs oder eines Hybridelektrokraftfahrzeugs, vorgeschlagen, wobei der Wärmeübertrager und ein Kühlmittelwärmeübertrager eines Kühlkreislaufs des Kraftfahrzeugs in einem gemeinsamen Luftpfad angeordnet sind, wobei eine Kühlmittelaustrittstemperatur eines Kühlmittels aus dem Kühlmittelwärmeübertrager ermittelt wird, wobei ferner vorgesehen ist, dass unter Verwendung der Kühlmittelaustrittstemperatur ein Vereisungszustand des Wärmeübertragers ermittelt wird, und wobei ein Abtauprozess des Wärmeübertragers eingeleitet wird, wenn eine Vereisung des Wärmeübertragers ermittelt wird.

Der Wärmeübertrager der Wärmepumpe kann auch als Umgebungswärmeübertrager bezeichnet werden. Die Wärmepumpe dient bevorzugt zum Beheizen eines Fahrgastraums des Kraftfahrzeugs.

Bei dem Kühlkreislauf des Kraftfahrzeugs kann es sich um einen Kreislauf zur Kühlung der elektrischen Antriebsmotoren und/oder der Batterie des Kraftfahrzeugs, insbesondere des Elektrofahrzeugs oder des batterieelektrischen Fahrzeugs oder des Hybridelektrokraftfahrzeugs, handeln.

Der Wärmeübertrager, beziehungsweise Umgebungswärmeübertrager, und der Kühlmittelwärmeübertrager sind in einem gemeinsamen Luftpfad angeordnet, das heißt, dass die luftseitig durch den Wärmeübertrager strömende Umgebungsluft auch durch den Kühlmittelwärmeübertrager strömt.

Erfindungsgemäß ist vorgesehen, dass eine Kühlmittelaustrittstemperatur eines Kühlmittels aus dem Kühlmittelwärmeübertrager ermittelt wird, wobei unter Verwendung der Kühlmittelaustrittstemperatur ein Vereisungszustand des Wärmeübertragers ermittelt wird, und wobei ein Abtauprozess des Wärmeübertragers eingeleitet wird, wenn eine Vereisung des Wärmeübertragers ermittelt wird.

Liegt eine Vereisung des Wärmeübertragers, beziehungsweise des Umgebungswärmeübertragers, der Wärmepumpe vor, so führt dies zu einer Abnahme des Luftmassenstroms im Luftpfad. Nimmt der Luftmassenstrom im Luftpfad ab, so verringert sich auch der Luftmassenstrom durch den Kühlmittelwärmeübertrager. Hierdurch kann es zu einer Änderung der Kühlmittelaustrittstemperatur des Kühlmittels am Kühlmittelwärmeübertrager kommen. Die Kühlmittelaustrittstemperatur kann daher ein Indiz für den Vereisungszustand des Wärmeübertragers der Wärmepumpe sein.

Der Vereisungszustand kann ein unvereister Zustand, ein leicht vereister Zustand oder ein stark vereister Zustand sein. Liegt eine Vereisung, insbesondere ein leicht oder ein stark vereister Zustand, des Wärmeübertragers vor, so wird ein dem Fachmann an sich bekannter Abtauprozess für den Wärmeübertrager der Wärmepumpe eingeleitet.

Durch die Verwendung einer Kühlmittelaustrittstemperatur des Kühlmittelwärmeübertragers für die Bestimmung des Vereisungszustandes des Wärmeübertragers der Wärmepumpe wird die Ermittlung des Vereisungszustandes des Wärmeübertragers unempfindlicher gegenüber externen Einflüssen. Zudem kann das erfindungsgemäße Verfahren in Kombination mit weiteren, beispielsweise aus dem Stand der Technik bekannten, Verfahren zur Ermittlung des Vereisungszustands des Wärmeübertragers der Wärmepumpe eingesetzt werden.

Bevorzugt ist der Kühlmittelwärmeübertrager in Strömungsrichtung der Luft hinter dem Wärmeübertrager im Luftpfad angeordnet.

Ferner ist bevorzugt vorgesehen, dass der Vereisungszustand, insbesondere eine Vereisung, des Wärmeübertragers aus einer Änderung, insbesondere aus einer Erhöhung, der Kühlmittelaustrittstemperatur ermittelt wird.

Nimmt der Luftmassenstrom im Luftpfad aufgrund einer Vereisung des Wärmeübertragers ab, so verringert sich in der Regel die Kühlleistung des Kühlmittelwärmeübertragers des Kühlkreislaufes für die Antriebsmotoren beziehungsweise für die Batterie des Kraftfahrzeugs. Daher kann sich die Kühlmittelaustrittstemperatur aus dem Kühlmittelwärmeübertrager erhöhen. Wird somit eine Veränderung, insbesondere eine Erhöhung, der Kühlmittelaustrittstemperatur ermittelt, so kann aus dieser Veränderung der Kühlmittelaustrittstemperatur ein Vereisungszustand des Wärmeübertragers ermittelt werden.

Ferner bevorzugt kann vorgesehen sein, dass eine Kühlmitteleintrittstemperatur des Kühlmittels in den Kühlmittelwärmeübertrager ermittelt wird, dass aus der Kühlmitteleintrittstemperatur und der Kühlmittelaustrittstemperatur eine Kühlmitteltemperaturdifferenz ermittelt wird, und dass aus einer Änderung, insbesondere aus einer Verringerung, der Kühlmitteltemperaturdifferenz der Vereisungszustand, insbesondere eine Vereisung, des Wärmeübertragers ermittelt wird.

Neben einer Änderung, insbesondere Erhöhung, der Kühlmittelaustrittstemperatur kann somit auch die Kühlmitteltemperaturdifferenz alternativ oder parallel zur Ermittlung des Vereisungszustandes des Wärmeübertragers herangezogen werden. In dem Fall, in dem sich aufgrund einer Vereisung des Wärmeübertragers die Kühlmittelaustrittstemperatur erhöht, verringert sich bei unveränderter Kühlmitteleintrittstemperatur auch die Temperaturdifferenz, sodass auch die Kühlmitteltemperaturdifferenz einen Hinweis auf eine Vereisung des Wärmeübertragers der Wärmepumpe gibt. Grundsätzlich ist es auch möglich, dass bei einer Vereisung des Wärmeübertragers der Wärmepumpe die Kühlmittelaustrittstemperatur zwar konstant bleibt, sich aufgrund eines aktuellen Anforderungsprofils jedoch die Kühlmitteleintrittstemperatur verringert. Eine sich verringernde Kühlmitteltemperaturdifferenz bei gleichzeitig in etwa konstant bleibender Kühlmittelaustrittstemperatur kann daher ebenfalls ein Indiz für eine Vereisung des Wärmeübertragers sein.

Mit weiterem Vorteil kann vorgesehen sein, dass ein Kühlmittelvolumenstrom und/oder eine Leistung einer Kühlmittelpumpe des Kühlkreislaufes ermittelt wird, und dass der Kühlmittelvolumenstrom und/oder die Leistung der Kühlmittelpumpe für die Bestimmung des Vereisungszustands des Wärmeübertragers herangezogen wird.

Der Kühlmittelvolumenstrom und/oder die Leistung der Kühlmittelpumpe kann herangezogen werden, um zu beurteilen, ob eine Veränderung der Kühlmittelaustrittstemperatur, insbesondere eine Erhöhung, und/oder eine Veränderung der Kühlmitteltemperaturdifferenz, insbesondere eine Verringerung, von einer Vereisung des Wärmeübertragers der Wärmepumpe herrührt. Der Kühlmittelvolumenstrom und/oder die Leistung der Kühlmittelpumpe beeinflussen die Kühlleistung des Kühlmittelwärmeübertragers. Bei einem geringen Kühlmittelvolumenstrom oder einer geringen Leistung der Kühlmittelpumpe wird üblicherweise eine geringere Kühlleistung und daher eine geringere Kühlmitteltemperaturdifferenz erwartet, welche daher nicht notwendigerweise auf eine Vereisung des Wärmeübertragers hinweisen muss. Liegt hingegen bei einem hohen Kühlmittelvolumenstrom oder bei einer hohen Leistung der Kühlmittelpumpe eine Änderung, insbesondere eine Verringerung, der Kühlmitteltemperaturdifferenz oder eine Veränderung, insbesondere eine Erhöhung, der Kühlmittelaustrittstemperatur vor, so deutet dies auf eine Vereisung des Wärmeübertragers der Wärmepumpe hin.

Weiter bevorzugt ist vorgesehen, dass der Kühlkreislauf für die Ermittlung des Vereisungszustands, bevorzugt periodisch, betrieben wird, wobei der Kühlkreislauf für die Ermittlung des Vereisungszustands weiter bevorzugt über einen bestimmten Zeitraum, noch weiter bevorzugt für weniger als 30 Sekunden, insbesondere bevorzugt für weniger als 20 Sekunden, betrieben wird.

In einem Kraftfahrzeug, insbesondere einem Elektrofahrzeug, einem batterieelektrischen Fahrzeug oder einem Hybridelektrokraftfahrzeug, wird der Kühlkreislauf für die Kühlung der elektrischen Antriebe beziehungsweise der Batterie nicht zwingend kontinuierlich betrieben. Um aus der Kühlmittelaustrittstemperatur beziehungsweise der Kühlmitteltemperaturdifferenz auf eine Vereisung des Wärmeübertragers der Wärmepumpe schließen zu können, kann es daher vorteilhaft sein, den Kühlkreislauf zumindest kurzzeitig auch dann zu betreiben, wenn dessen Kühlleistung nicht für die Kühlung der elektrischen Antriebe und/oder der Batterie benötigt wird. Der Kühlkreislauf kann daher in unregelmäßigen Abständen oder in regelmäßigen, insbesondere periodischen, Abständen betrieben werden.

Mit Vorteil kann vorgesehen sein, dass eine Kühlmitteltemperatur, insbesondere die Kühlmitteleintrittstemperatur, erhöht oder erniedrigt wird, wenn die Kühlmitteltemperatur, insbesondere die Kühlmitteleintrittstemperatur, in etwa einer Umgebungstemperatur entspricht.

Liegt die Kühlmitteltemperatur, beispielsweise die Kühlmitteleintrittstemperatur, des Kühlmittels des Kühlkreislaufes in etwa auf dem Temperaturniveau der Umgebungstemperatur, so kann keine Wärmeübertragung stattfinden. Für die Ermittlung des Vereisungszustandes des Wärmeübertragers der Wärmepumpe ist es daher von Vorteil, wenn die Kühlmitteltemperatur angehoben oder abgesenkt wird. Die Erhöhung der Kühlmitteltemperatur kann beispielsweise über ein PTC-Heizelement (Positive Temperature Coefficient) oder über einen Chiller, insbesondere einen Chiller der Wärmepumpe, erfolgen. Die Kühlung des Kühlmittels kann ebenfalls über einen Chiller erfolgen.

Mit weiterem Vorteil kann vorgesehen sein, dass für die Ermittlung des Vereisungszustands ein Parameter herangezogen wird, wobei der Parameter ein Indikator für eine aktuelle relative Luftgeschwindigkeit der Umgebungsluft zum Kraftfahrzeug ist.

Externe Einflüsse, welche die relative Luftgeschwindigkeit der Umgebungsluft zum Kraftfahrzeug beeinflussen, beeinflussen ebenfalls den Luftmassenstrom durch den Wärmeübertrager und durch den im gleichen Luftpfad angeordneten Kühlmittelwärmeübertrager. Diese Veränderung des Luftmassenstroms durch den Kühlmittelwärmeübertrager kann einen Einfluss auf die Kühlmittelaustrittstemperatur beziehungsweise auf die Kühlmitteltemperaturdifferenz haben. Durch die Berücksichtigung des eine aktuelle relative Luftgeschwindigkeit der Umgebungsluft zum Kraftfahrzeug betreffenden Parameters können derartige Einflüsse somit für die Bestimmung des Vereisungszustandes des Wärmeübertragers einbezogen werden.

Mit weiterem Vorteil kann vorgesehen sein, dass der Parameter die aktuelle Fahrgeschwindigkeit des Kraftfahrzeugs ist, und/oder dass der Parameter die Windgeschwindigkeit und/oder die Windrichtung ist.

Wird das Kraftfahrzeug mit einer hohen Fahrgeschwindigkeit bewegt, so erhöht sich die relative Luftgeschwindigkeit der Umgebungsluft zum Kraftfahrzeug. Hierdurch kann die Kühlmittelaustrittstemperatur trotz einer erhöhten Vereisung des Wärmeübertragers der Wärmepumpe konstant bleiben.

In entsprechender Weise kann auch die Windgeschwindigkeit oder die Windrichtung einen Einfluss auf die Kühlmittelaustrittstemperatur beziehungsweise Kühlmitteltemperaturdifferenz haben. Es ist dafür von Vorteil, wenn die Windgeschwindigkeit und/oder die Windrichtung für die Bestimmung des Vereisungszustandes herangezogen wird.

Mit weiterem Vorteil kann vorgesehen sein, dass der Parameter ein Abstandsignal, bevorzugt ein Abstandswert, des Kraftfahrzeugs zu einem vorausfahrenden Fahrzeug ist, und/oder dass der Parameter eine Fahrzeugposition ist, wobei die Fahrzeugposition bevorzugt eine Position des Kraftfahrzeugs in einem Straßentunnel, in einem Tal oder in einer Straßenschlucht ist.

Moderne Fahrzeuge weisen oft eine sogenannte Abstandssensorik auf, mit welcher festgestellt werden kann, ob sich das Kraftfahrzeug hinter einem vorausfahrenden Fahrzeug befindet. Manche dieser Systeme ermitteln zusätzlich noch den Abstandswert, beispielsweise in der Einheit Meter. Durch die von einem vorausfahrenden Fahrzeug bewirkte Abschirmung kann der Luftmassenstrom durch den Wärmeübertrager und den Kühlmittelwärmeübertrager verändert, insbesondere reduziert, werden. Es ist daher von Vorteil, ein Abstandsignal, insbesondere einen Abstandswert, für die Ermittlung des Vereisungszustandes des Wärmeübertragers der Wärmepumpe aus der Kühlmittelaustrittstemperatur beziehungsweise aus der Kühlmitteltemperaturdifferenz des Kühlmittelwärmeübertragers zu berücksichtigen.

Auch wenn sich das Kraftfahrzeug in einem Straßentunnel, in einem Tal oder in einer Straßenschlucht befindet, kann sich der Luftmassenstrom durch den Wärmeübertrager und den Kühlmittelwärmeübertrager ändern. Daher kann es ebenso von Vorteil sein, auch die Position des Kraftfahrzeugs für die Ermittlung des Vereisungszustandes des Wärmeübertragers der Wärmepumpe zu berücksichtigen. Die Position des Kraftfahrzeugs kann beispielsweise mittels eines Navigationssystems des Kraftfahrzeugs bestimmt werden.

Ferner bevorzugt kann vorgesehen sein, dass eine Taupunkttemperatur der Luft am Wärmeübertrager ermittelt wird, und/oder dass der Abtauprozess nur eingeleitet wird, wenn die Temperatur der Luft am Wärmeübertrager die Taupunkttemperatur unterschreitet.

Durch die Berücksichtigung der Taupunkttemperatur und/oder der Temperatur kann vermieden werden, dass ein Abtauprozess eingeleitet wird, auch wenn sich kein Eis auf dem Wärmeübertrager gebildet hat.

Mit weiterem Vorteil kann vorgesehen sein, dass die Luftdichte und/oder die Außenlufttemperatur und/oder eine Außenluftfeuchtigkeit für die Ermittlung des Vereisungszustandes des Wärmeübertragers berücksichtigt wird.

Mit weiterem Vorteil kann vorgesehen sein, dass der Parameter ein Öffnungsgrad einer Kühlerjalousie ist.

Die im Kraftfahrzeug in Strömungsrichtung bevorzugt vor dem Wärmeübertrager angeordnete Kühlerjalousie beeinflusst je nach Öffnungsgrad den Luftmassenstrom durch den Wärmeübertrager und durch den bevorzugt hinter dem Wärmeübertrager angeordneten Kühlmittelwärmeübertrager. Es ist daher vorteilhaft, wenn der Öffnungsgrad der Kühljalousie für die Ermittlung des Vereisungszustands des Wärmeübertragers berücksichtigt wird.

Eine weitere Lösung der der Erfindung zugrundeliegenden Aufgabe besteht in der Bereitstellung eines Kraftfahrzeugs, insbesondere eines Elektrofahrzeugs, eines batterieelektrischen Fahrzeugs oder eines Hybridelektrokraftfahrzeugs, mit einer Vorrichtung zum Abtauen eines Wärmeübertragers einer Wärmepumpe des Kraftfahrzeugs, wobei die Vorrichtung eine Recheneinheit aufweist, welche ausgebildet ist, ein vorbeschriebenes Verfahren durchzuführen.

Das Kraftfahrzeug verfügt bevorzugt über Sensoren zur Bestimmung der Kühlmittelaustrittstemperatur und gegebenenfalls der Kühlmitteleintrittstemperatur, des Kühlmittelvolumenstroms und/oder der Leistung der Kühlmittelpumpe des Kühlkreislaufs.

Zudem kann das Kraftfahrzeug eine Abstandssensorik, Sensoren zur Ermittlung der Windgeschwindigkeit und/oder Windrichtung und/oder ein Navigationssystem aufweisen.

Die vorliegende Erfindung wird nachstehend näher anhand der beigefügten Figur erläutert.

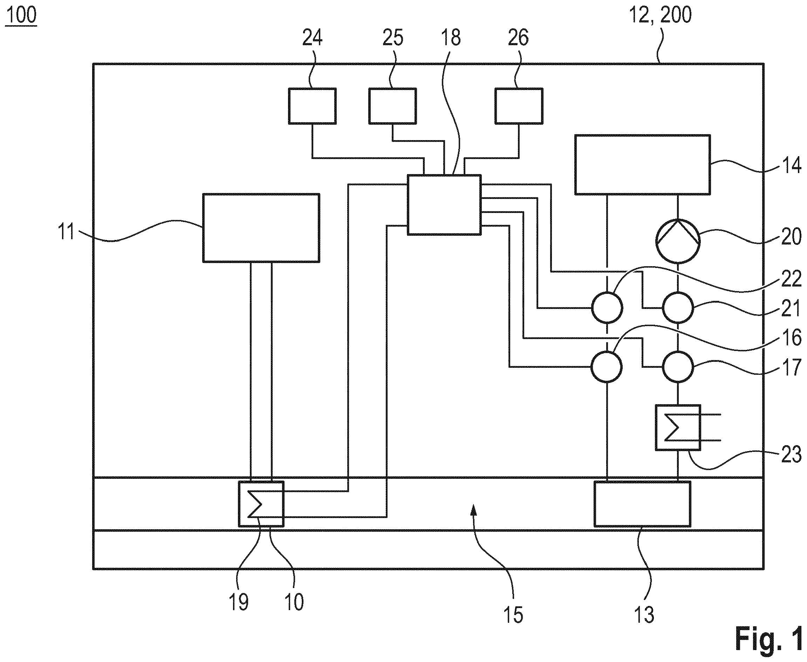

- Fig. 1: zeigt eine schematische Darstellung eines Kraftfahrzeugs mit einem Wärmeübertrager einer Wärmepumpe und einem Kühlmittelwärmeübertrager eines Kühlkreislaufs.

Anhand der Fig. 1 wird ein Verfahren 100 zum Einleiten eines Abtauprozesses eines Wärmeübertragers 10 einer Wärmepumpe 11 eines nur schematisch dargestellten Kraftfahrzeugs 200 erläutert. Das Kraftfahrzeug 200 ist als ein batterieelektrisches Fahrzeug 12 ausgebildet. Die Wärmepumpe 11 des Kraftfahrzeugs 200 dient der Beheizung eines Fahrgastraums des Kraftfahrzeugs 200. Ein Kühlmittelwärmeübertrager 13 eines Kühlkreislaufs 14 für den elektrischen Antrieb und die Batterie des Kraftfahrzeugs 200 ist gemeinsam mit dem Wärmeübertrager 10 der Wärmepumpe 11 in demselben Luftpfad 15 angeordnet. In dem Kühlkreislauf 14 ist an der Austrittsseite des Kühlmittelwärmeübertragers 13 ein erster Temperatursensor 16 vorgesehen, mit welchem eine Kühlmittelaustrittstemperatur des Kühlmittels aus dem Kühlmittelwärmeübertrager 13 ermittelt wird. In dem Kühlkreis 14 ist ferner an der Eintrittsseite des Kühlmittelwärmeübertragers 13 ein zweiter Temperatursensor 17 zur Ermittlung der Kühlmitteleintrittstemperatur in den Kühlmittelwärmeübertrager 13 vorgesehen. Die Sensordaten des ersten Temperatursensors 16 und des zweiten Temperatursensors 17 werden an eine Recheneinheit 18 des Kraftfahrzeugs 200 weitergeleitet, welche aus der Kühlmitteleintrittstemperatur und der Kühlmittelaustrittstemperatur eine Kühlmitteltemperaturdifferenz errechnet und die Kühlmitteltemperaturdifferenz und/oder die Kühlmittelaustrittstemperatur verwendet, um einen Vereisungszustand des Wärmeübertragers 10 der Wärmepumpe 11 zu ermitteln. Liegt eine Vereisung des Wärmeübertragers 10 vor, so wird ein Abtauprozess des Wärmeübertragers 10 eingeleitet. Hierzu können aus dem Stand der Technik bekannte Verfahren, wie zum Beispiel die Verwendung eines Heizelementes 19, eingesetzt werden.

Zusätzlich werden die Leistung einer Kühlmittelpumpe 20 sowie ein Kühlmittelvolumenstrom im Kühlkreislauf 14 mittels weiterer Sensoren 21, 22 ermittelt und an die Rechenvorrichtung 18 übermittelt. Die Rechenvorrichtung 18 verwendet die ermittelte Leistung der Kühlmittelpumpe 20 sowie den ermittelten Kühlmittelvolumenstrom zusätzlich zu der Kühlmitteltemperaturdifferenz und/oder der Kühlmittelaustrittstemperatur, um auf den Vereisungszustand des Wärmeübertragers 10 zu schließen.

Da der Kühlkreislauf 14 in der Regel nicht kontinuierlich zur Kühlung des elektrischen Antriebs oder der Batterie des Kraftfahrzeugs 200 betrieben wird, ist die Rechenvorrichtung 18 zudem dazu ausgebildet, den Kühlkreislauf 14 in periodischen Abständen, beispielsweise für einen Zeitraum von ca. 30 Sekunden, für die Ermittlung des Vereisungszustands des Wärmeübertragers 10 der Wärmepumpe 11 zu betreiben. Für den Fall, dass die Kühlmitteltemperatur im Kühlkreislauf 14 im Wesentlichen der Umgebungstemperatur entspricht, so dass keine Wärmeübertragung stattfinden kann, kann die Kühlmitteltemperatur, insbesondere die Kühlmitteleintrittstemperatur, mittels eines PTC-Heizelements 23 erhöht werden.

Zusätzlich zu den vorgenannten Parametern kann die Recheneinheit 18 noch weitere Parameter zur Ermittlung des Vereisungszustands des Wärmeübertragers 10 der Wärmepumpe 11 heranziehen. So können die Abstandssignale einer Abstandssensorik 24 zur Bestimmung eines Abstands des Kraftfahrzeugs 200 zu einem vorausfahrenden Fahrzeug und/oder Messwerte einer Sensorik 25 zur Ermittlung einer Windgeschwindigkeit herangezogen werden. Ferner umfasst das Kraftfahrzeug 200 ein Navigationssystem 26, dessen Information über die Position des Kraftfahrzeugs 200 ebenfalls für die Ermittlung des Vereisungszustandes des Wärmeübertragers 10 herangezogen werden können.

### Bezugszeichenliste

- 100: Verfahren
- 200: Kraftfahrzeug
- 10: Wärmeübertrager
- 11: Wärmepumpe
- 12: Batterieelektrisches Fahrzeug
- 13: Kühlmittelwärmeübertrager
- 14: Kühlkreislauf
- 15: Luftpfad
- 16: Erster Temperatursensor
- 17: Zweiter Temperatursensor
- 18: Recheneinheit
- 19: Heizelement
- 20: Kühlmittelpumpe
- 21: Sensor
- 22: Sensor
- 23: PTC-Heizelement
- 24: Abstandssensorik
- 25: Sensorik
- 26: Navigationssystem

## Patentansprüche

1. Verfahren (100) zum Einleiten eines Abtauprozesses eines Wärmeübertragers (10) einer Wärmepumpe (11) eines Kraftfahrzeugs (200), insbesondere eines Elektrofahrzeugs oder eines batterieelektrischen Fahrzeugs (12) oder eines Hybridelektrokraftfahrzeugs, wobei der Wärmeübertrager (10) und ein Kühlmittelwärmeübertrager (13) eines Kühlkreislaufes (14) des Kraftfahrzeugs (200) in einem gemeinsamen Luftpfad (15) angeordnet sind, wobei eine Kühlmittelaustrittstemperatur eines Kühlmittels aus dem Kühlmittelwärmeübertrager (13) ermittelt wird, **dadurch gekennzeichnet, dass**
unter Verwendung der Kühlmittelaustrittstemperatur ein Vereisungszustand des Wärmeübertragers (10) ermittelt wird, wobei ein Abtauprozess des Wärmeübertragers (10) eingeleitet wird, wenn eine Vereisung des Wärmeübertragers (10) ermittelt wird.

2. Verfahren (100) nach Anspruch 1, **dadurch gekennzeichnet, dass** der Vereisungszustand, insbesondere eine Vereisung, des Wärmeübertragers (10) aus einer Änderung, insbesondere aus einer Erhöhung, der Kühlmittelaustrittstemperatur ermittelt wird.

3. Verfahren (100) nach Anspruch 1 oder 2, **dadurch gekennzeichnet, dass** eine Kühlmitteleintrittstemperatur des Kühlmittels in den Kühlmittelwärmeübertrager (13) ermittelt wird, dass aus der Kühlmitteleintrittstemperatur und der Kühlmittelaustrittstemperatur eine Kühlmitteltemperaturdifferenz ermittelt wird, und dass aus einer Änderung, insbesondere aus einer Verringerung, der Kühlmitteltemperaturdifferenz der Vereisungszustand, insbesondere eine Vereisung, des Wärmeübertragers (10) ermittelt wird.

4. Verfahren (100) nach einem der vorgenannten Ansprüche, **dadurch gekennzeichnet, dass** ein Kühlmittelvolumenstrom und/oder eine Leistung einer Kühlmittelpumpe (20) des Kühlkreislaufs (14) ermittelt wird, und dass der Kühlmittelvolumenstrom und/oder die Leistung der Kühlmittelpumpe (20) für die Bestimmung des Vereisungszustands des Wärmeübertragers (10) herangezogen wird.

5. Verfahren (100) nach einem der vorgenannten Ansprüche, **dadurch gekennzeichnet, dass** der Kühlkreislauf (14) für die Ermittlung des Vereisungszustands, bevorzugt periodisch, betrieben wird, wobei der Kühlkreislauf (14) für die Ermittlung des Vereisungszustands bevorzugt über einen bestimmten Zeitraum, weiter bevorzugt für weniger als 30 Sekunden, insbesondere bevorzugt für weniger als 20 Sekunden, betrieben wird.

6. Verfahren (100) nach einem der vorgenannten Ansprüche, **dadurch gekennzeichnet, dass** eine Kühlmitteltemperatur, insbesondere die Kühlmitteleintrittstemperatur, erhöht oder erniedrigt wird, wenn die Kühlmitteltemperatur, insbesondere die Kühlmitteleintrittstemperatur, in etwa einer Umgebungstemperatur entspricht.

7. Verfahren (100) nach einem der vorgenannten Ansprüche, **dadurch gekennzeichnet, dass** für die Ermittlung des Vereisungszustands ein Parameter herangezogen wird, wobei der Parameter ein Indikator für eine aktuelle relative Luftgeschwindigkeit der Umgebungsluft zum Kraftfahrzeug (200) ist.

8. Verfahren (100) nach Anspruch 7, **dadurch gekennzeichnet, dass** der Parameter die aktuelle Fahrgeschwindigkeit des Kraftfahrzeugs (200) ist, und/oder dass der Parameter die Windgeschwindigkeit und/oder die Windrichtung ist.

9. Verfahren (100) nach Anspruch 7 oder 8, **dadurch gekennzeichnet, dass** der Parameter ein Abstandssignal, bevorzugt ein Abstandswert, des Kraftfahrzeugs (200) zu einem vorausfahrenden Fahrzeug ist, und/oder dass der Parameter eine Fahrzeugposition ist, wobei die Fahrzeugposition bevorzugt eine Position des Kraftfahrzeugs (200) in einem Straßentunnel, in einem Tal oder in einer Straßenschlucht ist.

10. Kraftfahrzeug (200), insbesondere Elektrofahrzeug oder batterieelektrisches Fahrzeug (12) oder Hybridelektrokraftfahrzeug, mit einer Vorrichtung zum Abtauen eines Wärmeübertragers (10) einer Wärmepumpe (11) des Kraftfahrzeugs (200), wobei die Vorrichtung (20) eine Recheneinheit (19) aufweist, welche ausgebildet ist, ein Verfahren (100) nach einem der vorgenannten Ansprüche auszuführen.

## Claims

1. Method (100) for initiating a defrosting process of a heat exchanger (10) of a heat pump (11) of a motor vehicle (200), in particular an electric vehicle or a battery electric vehicle (12) or a hybrid electric motor vehicle, wherein the heat exchanger (10) and a coolant heat exchanger (13) of a cooling circuit (14) of the motor vehicle (200) are arranged in a common air path (15), wherein a coolant outlet temperature of a coolant from the coolant heat exchanger (13) is determined, **characterized in that**
using the coolant outlet temperature a state of icing of the heat exchanger (10) is determined, wherein a defrosting process of the heat exchanger (10) is initiated if icing of the heat exchanger (10) is determined.

2. Method (100) according to Claim 1, **characterized in that** the state of icing, in particular icing, of the heat exchanger (10) is determined from a change, in particular from an increase, in the coolant outlet temperature.

3. Method (100) according to Claim 1 or 2, **characterized in that** a coolant inlet temperature of the coolant into the coolant heat exchanger (13) is determined, and that a coolant temperature difference is determined from the coolant inlet temperature and the coolant outlet temperature, and **in that** the state of icing, in particular icing, of the heat exchanger (10) is determined from a change, in particular from a decrease, in the coolant temperature difference.

4. Method (100) according to one of the preceding claims, **characterized in that** a coolant volume flow and/or a performance of a coolant pump (20) of the cooling circuit (14) is determined, and **in that** the coolant volume flow and/or the performance of the coolant pump (20) is used for the determination of the state of icing of the heat exchanger (10).

5. Method (100) according to one of the preceding claims, **characterized in that** the cooling circuit (14) is operated, preferably periodically, for the determination of the state of icing, wherein the cooling circuit (14) is operated preferably over a specific period of time, more preferably for less than 30 seconds, particularly preferably for less than 20 seconds, for the determination of the state of icing.

6. Method (100) according to one of the preceding claims, **characterized in that** a coolant temperature, in particular a coolant inlet temperature, is increased or decreased when the coolant temperature, in particular the coolant inlet temperature, corresponds approximately to an ambient temperature.

7. Method (100) according to one of the preceding claims, **characterized in that** a parameter is used for the determination of the state of icing, wherein the parameter is an indicator of a current relative air speed of the ambient air in relation to the motor vehicle (200).

8. Method (100) according to Claim 7, **characterized in that** the parameter is the current driving speed of the motor vehicle (200), and/or **in that** the parameter is the wind speed and/or the wind direction.

9. Method (100) according to Claim 7 or 8, **characterized in that** the parameter is a distance signal, preferably a distance value, of the motor vehicle (200) in relation to a vehicle travelling ahead, and/or **in that** the parameter is a vehicle position, wherein the vehicle position is preferably a position of the motor vehicle (200) in a road tunnel, in a valley or in an urban canyon.

10. Motor vehicle (200), in particular an electric vehicle or battery electric vehicle (12) or hybrid electric vehicle, with a device for defrosting a heat exchanger (10) of a heat pump (11) of the motor vehicle (200), wherein the device (20) has a computing unit (19) which is designed to carry out a method (100) according to one of the preceding claims.

## Revendications

1. Procédé (100) pour initier un processus de dégivrage d'un échangeur de chaleur (10) d'une pompe à chaleur (11) d'un véhicule automobile (200), notamment d'un véhicule électrique ou d'un véhicule électrique à batterie (12) ou d'un véhicule automobile électrique hybride, l'échangeur de chaleur (10) et un échangeur de chaleur de réfrigérant (13) d'un circuit de refroidissement (14) du véhicule automobile (200) étant agencés dans un trajet d'air commun (15), une température de sortie de réfrigérant d'un réfrigérant provenant de l'échangeur de chaleur de réfrigérant (13) étant déterminée, **caractérisé en ce qu'**un état de givrage de l'échangeur de chaleur (10) est déterminé en utilisant la température de sortie de réfrigérant, un processus de dégivrage de l'échangeur de chaleur (10) étant initié lorsqu'un givrage de l'échangeur de chaleur (10) est déterminé.

2. Procédé (100) selon la revendication 1, **caractérisé en ce que** l'état de givrage, notamment un givrage, de l'échangeur de chaleur (10) est déterminé à partir d'une modification, notamment d'une augmentation, de la température de sortie de réfrigérant.

3. Procédé (100) selon la revendication 1 ou 2, **caractérisé en ce qu'**une température d'entrée de réfrigérant du réfrigérant dans l'échangeur de chaleur de réfrigérant (13) est déterminée, **en ce qu'**une différence de température de réfrigérant est déterminée à partir de la température d'entrée de réfrigérant et de la température de sortie de réfrigérant, et **en ce que** l'état de givrage, notamment un givrage, de l'échangeur de chaleur (10) est déterminé à partir d'une modification, notamment d'une diminution, de la différence de température de réfrigérant.

4. Procédé (100) selon l'une quelconque des revendications précédentes, **caractérisé en ce qu'**un débit volumique de réfrigérant et/ou une puissance d'une pompe à réfrigérant (20) du circuit de refroidissement (14) est déterminé(e), et **en ce que** le débit volumique de réfrigérant et/ou la puissance de la pompe à réfrigérant (20) est utilisé(e) pour déterminer l'état de givrage de l'échangeur de chaleur (10).

5. Procédé (100) selon l'une quelconque des revendications précédentes, **caractérisé en ce que** le circuit de refroidissement (14) fonctionne, de préférence périodiquement, pour déterminer l'état de givrage, le circuit de refroidissement (14) fonctionnant de préférence pendant une certaine période de temps pour déterminer l'état de givrage, de manière davantage préférée pendant moins de 30 secondes, de manière particulièrement préférée pendant moins de 20 secondes.

6. Procédé (100) selon l'une quelconque des revendications précédentes, **caractérisé en ce qu'**une température de réfrigérant, notamment la température d'entrée de réfrigérant, est augmentée ou diminuée lorsque la température de réfrigérant, notamment la température d'entrée de réfrigérant, correspond approximativement à une température ambiante.

7. Procédé (100) selon l'une quelconque des revendications précédentes, **caractérisé en ce qu'**un paramètre est utilisé pour déterminer l'état de givrage, le paramètre étant un indicateur d'une vitesse d'air relative actuelle de l'air ambiant par rapport au véhicule automobile (200).

8. Procédé (100) selon la revendication 7, **caractérisé en ce que** le paramètre est la vitesse de déplacement actuelle du véhicule automobile (200), et/ou **en ce que** le paramètre est la vitesse du vent et/ou la direction du vent.

9. Procédé (100) selon la revendication 7 ou 8, **caractérisé en ce que** le paramètre est un signal de distance, de préférence une valeur de distance, du véhicule automobile (200) par rapport à un véhicule qui le précède, et/ou **en ce que** le paramètre est une position du véhicule, la position du véhicule étant de préférence une position du véhicule automobile (200) dans un tunnel routier, dans une vallée ou dans une rue encaissée.

10. Véhicule automobile (200), notamment véhicule électrique ou véhicule électrique à batterie (12) ou véhicule automobile électrique hybride, avec un dispositif de dégivrage d'un échangeur de chaleur (10) d'une pompe à chaleur (11) du véhicule automobile (200), le dispositif (20) présentant une unité de calcul (19) qui est configurée pour exécuter un procédé (100) selon l'une quelconque des revendications précédentes.
